# EUROPEAN PATENT SPECIFICATION

(11) **EP 1 082 863 B1**
(45) Date of publication and mention of the grant of the patent: **16.01.2002**
(21) Application number: 99920623.8
(22) Date of filing: 06.04.1999
(51) Int. Cl.: H04Q 7/22, H04Q 7/38

(54) **METHOD FOR, USING A QUEUE, MAKING AVAILABLE A RELEASED VOICE CHANNEL IN A CELLULAR TELECOMMUNICATIONS SYSTEM.**
VERFAHREN ZUR BEREITSTELLUNG EINES FREIGEKOMMENEN SPRACHKANALS UNTER VERWENDUNG EINER WARTESCHLANGE IN EINEM ZELLULAREN TELEKOMMUNIKATIONSSYSTEM
PROCEDE VISANT A RENDRE DISPONIBLE, A L'AIDE D'UNE FILE D'ATTENTE, UNE VOIE TELEPHONIQUE LIBEREE DANS UN SYSTEME CELLULAIRE DE TELECOMMUNICATIONS

(30) Priority: 05.06.1998 NL 1009320
(43) Date of publication of application: 14.03.2001
(73) Proprietor: Koninklijke KPN N.V., 9726 AE Groningen (NL)
(72) Inventor: BIJLSMA, Michel, NL-3524 CM Utrecht (NL)
(74) Representative: Wuyts, Koenraad Maria
(86) International application number: EP9902417
(87) International publication number: WO9965258

(56) References cited:
- EP-A- 0 370 826
- EP-A- 0 491 494
- US-A- 5 259 021
- US-A- 5 570 411
- US-A- 5 574 774

## Description

### A. BACKGROUND OF THE INVENTION

The invention relates to a method for making available a voice channel, released after a period of congestion, in a cellular telecoimminications system, comprising the following steps:
- determining ― upon receipt by a base station, by way of the signalling channel intended for that purpose, of a call from a user of a mobile terminal located within reach of said base station ― whether a voice channel is available for processing said call;
- setting up a link with the destination dialled by the caller, if a voice channel is available;
- if no voice channel is available, transmitting a congestion message to the caller and placing the call in a queue by the base station when a reservation code is received in the base station from the caller by way of the signalling channel;
- determining, in the event of release of a voice channel, whether there are calls in the queue, transmitting from the base station a first notification to the caller whose call has been in the queue the longest, which first notification notifies said caller that a voice channel has become available to him, and setting up a connection for that call.

In existing systems for mobile, cellular telecommunication, such as GSM [= Global System for Mobile communications] systems, problems arise from the fact that it is impossible to set up a call connection from a mobile terminal if all voice channels associated with a base station are occupied, particularly when such a situation is relatively long-lasting. Although it is known to place calls which, during a period of congestion, cannot be honoured, in a queue and to honour them as yet, either in order of arrival or according to earlier agreed priorities, in the event of release of a channel.

Such use of a queue is disclosed in EP-A-0491494. In the telecommunications system according to this known technique, in the event of release of a voice channel an application for a call having a destination disclosed earlier is honoured by setting up the connection to the dialled destination, possibly accompanied by a notification to the caller that the requested connection is being set up now.

A drawback of such a method lies in the fact that during the waiting period the caller may have come to the conclusion that there is no longer required a connection to the originally dialled destination, or that another destination is now preferred. The caller, however, is not given the opportunity of cancelling the call as yet (other than by completely cancelling the call), or of changing destination. In addition, the known method specifically aims at users who have subscribed in advance to gaining access with an increased priority level.

### B. SUMMARY OF THE INVENTION

Using a method according to the invention, the object of the invention is to eliminate the above drawbacks, namely, by offering a caller per call, and therefore without any prior actions, the option of being placed in a queue in the event of congestion, and by offering said caller, in the event of a voice channel becoming available to him subsequently, after a waiting period, the opportunity of utilising the released channel, or not, for a connection with the originally dialled destination. For this purpose, a method according to the invention is characterised in that the method further comprises the following steps:
- monitoring (6), prior to placing the call in a queue, whether the reservation code is received by the base station within a predetermined first time interval, which time interval starts at the transmitting of the congestion message, and when this is the case, performing the step (7) of placing the call in a queue and when this is not the case, starting (1) to handle the next call, without placing the original call in a queue;
- during a predetermined second time interval, waiting (11) in the base station for dialling information from the caller to whom the notification of a voice channel becoming available was transmitted and, in the event of receiving such dialling information, setting up (13) the connection to the destination associated with said dialling information.

According to a first preferred embodiment of the method according to the invention, the data associated with a call is stored in the memory means, present in the base station, after having received the reservation code, which reservation code is accompanied by a caller identification.

According to a second preferred embodiment, a call is deleted from the queue when the mobile terminal from which the call was made is switched off.

According to a third preferred embodiment, a call is deleted from the queue when, after the call has been placed in the queue, a third time interval has elapsed before a voice channel has become available.

According to a fourth preferred embodiment of the invention, the base station transmits a second notification to the caller when his call is deleted from the queue.

According to a fifth preferred embodiment, a call from a specific mobile terminal is included in the queue of a base station only once.

According to a sixth preferred embodiment, a caller in the queue is notified by the cellular telecommunications system of the number of older calls in the queue, eligible for being processed sooner, namely, substantially simultaneous with the placement in the queue or as soon as the number of older calls declines.

According to a seventh preferred embodiment, the call is deleted from the queue of the first base station and placed in the queue of the second base station, following calls possibly located therein, when the mobile terminal from which the call originated is shifted from the range of a first base station to the range of a second base station, if at that time there is no voice channel available in the second base station.

According to an eighth preferred embodiment, the time interval during which each call is in the queue is updated in the queue and, in the event of shifting the call from a queue in a first base station to a queue in a second base station, the call is shifted to a position in the second queue corresponding to the duration of its stay in the first queue.

### C. REFERENCE

- EP-A-0491494: Call path resource allocation in a wireless telecommunications system.

### D. BRIEF DESCRIPTION OF THE DRAWING

The invention will be explained in greater detail by means of the description of an exemplary embodiment, reference being made to a drawing in which:
FIG. 1 gives a schematic picture of the surroundings in which the method according to the invention is used; and
FIG. 2A and FIG. 2B in the form of flow diagrams show the various actions in the base station and the mobile terminals, respectively.

### E. DESCRIPTION OF AN EXEMPLARY EMBODIMENT

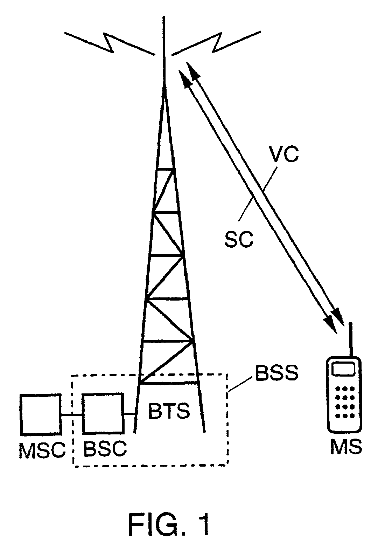

In FIG. 1, BSS is the "base station subsystem", provided with an antenna system BTS ("base transceiver station") for communicating with mobile stations MS by way of signalling channels SC and voice channels VC. A BSS is connected, by way of a base station controller BSC included therein, to a "mobile switching centre" MSC. Each MSC is connected to the "permanent network" ― the telecommunications infrastructure.

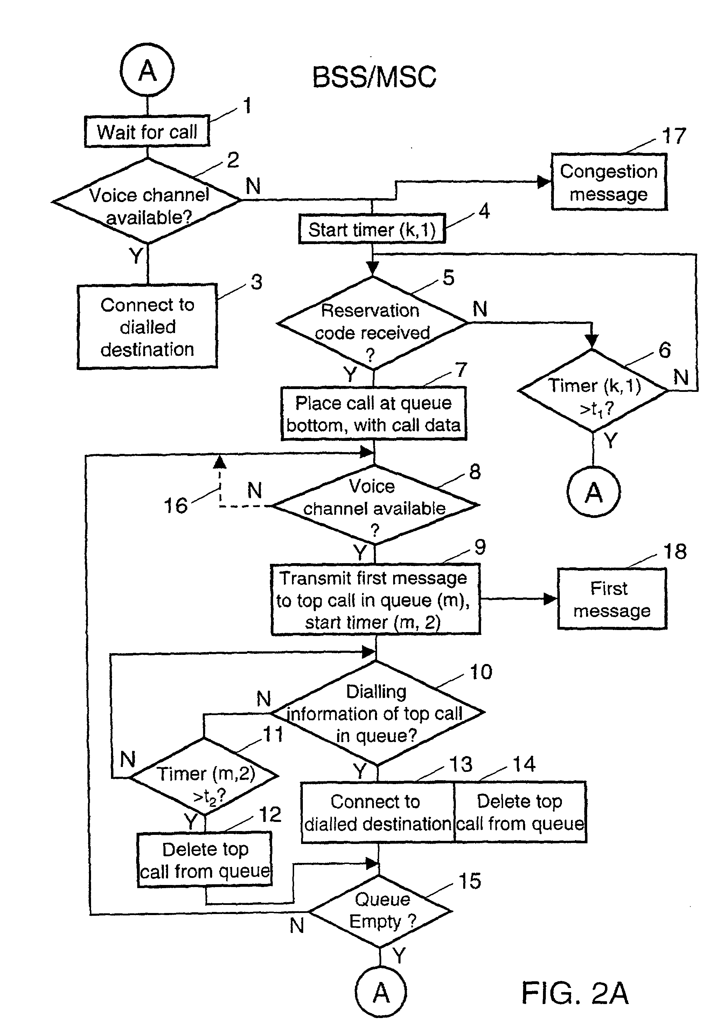

FIG. 2A in the form of a flow diagram shows the various actions in a BSS/MSC combination in the event of applying the method according to the invention. In block (1), a call is awaited which enters the BSS in question by way of signalling channel SC. Upon receipt of a call, it is verified in block (2) whether a voice channel VC is available; if there is a free voice channel present, then in block (3) the caller is connected to the dialled destination according to the known procedure not described here. If there is no voice channel available (all channels are taken), then a congestion notification is transmitted to the caller by way of signalling channel SC (block (17)), and in block (4) a time-monitoring circuit "timer (k,1)" is started; here, it concerns the "timer" number 1 at the k^{th} call, which goes off after a time interval t₁. In block (5) it is detected, during time interval t₁, whether a reservation code is received from the caller k. In block (6), it is possibly observed that the time interval t₁ has elapsed without a reservation code having been received; if such is the case, then a next call in block (1) is awaited. If, on the other hand, a reservation code has been received in time, then in block (7) the call in question is placed at the bottom of the queue, together with the relevant data of the caller. This may be the data obtained upon receipt of the call, or derived from the message including the reservation code; said message contains the identity of the caller. In block (8) it is verified whether a voice channel has meanwhile become available; if so, in block (9) there is transmitted a first notification (18) to the top caller in the queue (who has been there the longest). Said notification may take place, e.g., in the form of a special sound signal or as a spoken message. In addition, a second time-monitoring circuit "timer (m,2)" is started; here, it concerns the "timer" number 2 at the m^{th} call, which goes off after a time interval t₂. In block (10), there is awaited dialling information originating from the top caller in the queue. In block (11), it is possibly observed that the time interval t₂ has elapsed without dialling information having been received from the top caller in the queue; if such is the case, then the top call is deleted from the queue, whereafter in block (15) it is verified whether the queue is now empty. If the queue is empty, then a jump is made to block (1). If, on the other hand, dialling information has been received in time from the top caller in the queue, then in block (13) the caller in question is connected to the dialled destination; this may be another destination than the one originally dialled (for which purpose the caller must have dialled a new number after the first notification) or the original destination (for which purpose the caller must have confirmed the original choice after the first notification, e.g., using a repeat key). In addition, in block (14) the top call is deleted from the queue, whereafter in block (15) it is verified whether the queue is now empty. If the queue is empty, then a jump is made to block (1); if not, then to block (8). Optionally, in loop (16) there is still carried out a third time monitoring which results in a call being deleted from the queue when, after placing the call in question in the queue, a third time interval has elapsed before a voice channel has become available.

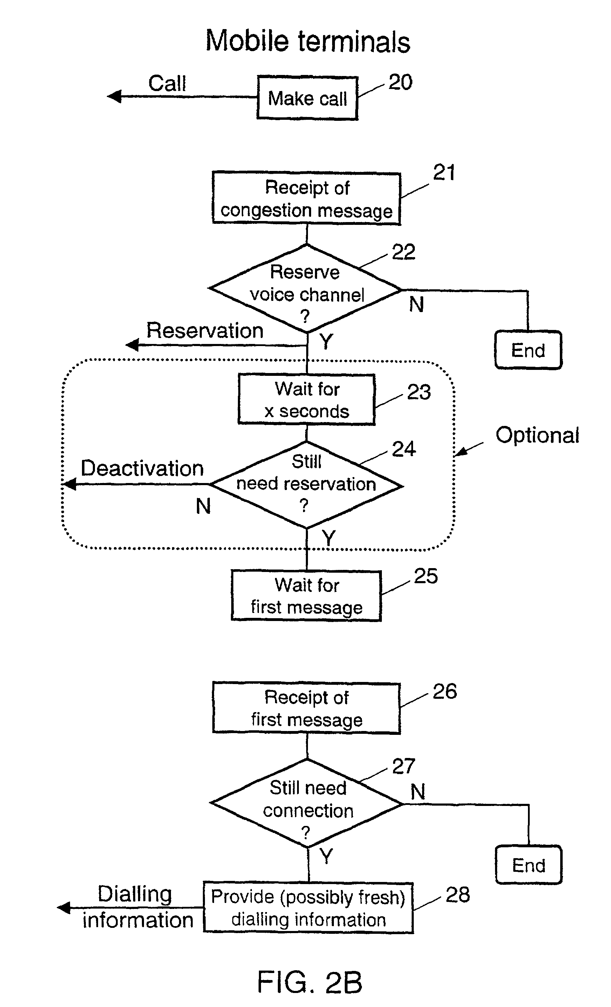

FIG. 2B in the form of a flow diagram shows the actions in mobile terminals or mobile stations. In block (20) there is generated a call by way of signalling channel SC, since a caller wishes to utilise a voice channel VC. If no free voice channel is available, in block (21) a congestion notification (17) is received by MS. Should the caller desire to reserve a voice channel, he transmits a reservation code which is detected in block (5). Optionally, he may cancel said reservation in block (24), prior to a free voice channel being allotted to him: deactivation of the reservation service. If not, he awaits the receipt of the first notification - the notification that a voice channel is now available to him. Even then, he may deactivate the reservation service as yet: decision in block (27). Should the caller still need connection, he then provides dialling information in block (28), whether differing or not from the original dialling information, whereafter the dialled connection is set up.

## Claims

1. Method for making available a voice channel, released after a period of congestion, in a cellular telecommunications system, comprising the following steps:
- determining (2) - upon receipt by a base station, by way of the signalling channel intended for that purpose, of a call from a user of a mobile terminal located within reach of said base station - whether a voice channel is available for processing said call;
- setting up (3) a link with the destination dialled by the caller, if a voice channel is available;
- if no voice channel is available, transmitting (17) a congestion message to the caller and placing (7) the call in a queue by the base station when a reservation code is received in the base station from the caller by way of the signalling channel;
- determining, in the event of release of a voice channel, whether there are calls in the queue, transmitting (18) from the base station a first notification to the caller whose call has been in the queue the longest, which first notification notifies said caller that a voice channel has become available to him, and setting up (13) a connection for that call;
**characterised in that** the method further comprises the following steps:
- monitoring (6), prior to placing the call in a queue, whether the reservation code is received by the base station within a predetermined first time interval, which time interval starts at the transmitting of the congestion message, and when this is the case, performing the step (7) of placing the call in a queue and when this is not the case, starting (1) to handle the next call, without placing the original call in a queue;
- during a predetermined second time interval, waiting (11) in the base station for dialling information from the caller to whom the notification of a voice channel becoming available was transmitted and, in the event of receiving such dialling information, setting up (13) the connection to the destination associated with said dialling information.

2. Method according to claim 1, **characterised in that** the data associated with the call is stored in a memory means, present in the base station, after receipt of the reservation code, which reservation code is accompanied by an identification of the caller.

3. Method according to claim 1, **characterised in that** a call is deleted from the queue when the mobile terminal, from which the call originated, is switched off.

4. Method according to claim 1, **characterised in that** a call is deleted from the queue when, after the call has been placed in the queue, there has elapsed a third time interval before a voice channel has become available.

5. Method according to claim 4, **characterised in that** a second notification is transmitted to the caller from the base station when his call is deleted from the queue.

6. Method according to any of the preceding claims, **characterised in that** a call from a specific mobile terminal is included in the queue of a basic station only once.

7. Method according to any of the preceding claims, **characterised in that** a caller in the queue is notified by the cellular telecommunications system of the number of older calls in the queue, eligible for being processed sooner, namely, substantially simultaneous with the placement in the queue or as soon as the number of older calls declines.

8. Method according to any of the preceding claims, **characterised in that**, when the mobile terminal from which the call originated is shifted from the range of a first base station to the range of a second base station, the call is deleted from the queue of the first base station and placed in the queue of the second base station next to calls possibly already located therein, if at that point in time there is no voice channel available in the second base station.

9. Method according to claim 8, **characterised in that**, for each call in a queue, the time interval during which the call in question is in the queue is updated and, in the event of shifting the call from a queue in a first base station to a queue in a second base station, the call is shifted to a position in the second queue corresponding to the duration of its stay in the first queue.

## Patentansprüche

1. Verfahren zur Bereitstellung eines Sprachkanals, der nach einer Zeit der Überlastung freigekommen ist, in einem zellulären Telekommunikationssystem mit den folgenden Verfahrensschritten:
- Bestimmen (2), nach Empfang eines Anrufs von einem Benutzer eines mobilen Endgerätes, welches in Reichweite der besagten Basisstation angeordnet ist, durch eine Basisstation über einen für diesen Zweck vorgesehenen Signalisierkanal, ob ein Sprachkanal für die Bearbeitung des besagten Anrufs verfügbar ist,
- Aufsetzen (3) einer Verbindung mit dem durch den Anrufer gewählten Ziel, falls ein Sprachkanal verfügbar ist,
- Übermitteln (17) einer Überlastungsmeldung an den Anrufer, falls kein Sprachkanal verfügbar ist, und Anordnen (7) des Anrufs in einer Warteschlange durch die Basisstation, wenn in der Basisstation ein Reservierungscode von dem Anrufer über den Signalisierkanal empfangen worden ist,
- Bestimmen im Falle des Freikommens eines Sprachkanals, ob Anrufe in der Schlange anstehen, Übermitteln (18) von der Basisstation einer ersten Mitteilung an den Anrufer, dessen Anruf in der Warteschlange am längsten verblieben ist, welche erste Mitteilung den besagten Anrufer darauf hinweist, dass ein Sprachkanal für ihn freigekommen ist, und Aufsetzen (13) der Verbindung für diesen Anruf,
**dadurch gekennzeichnet, dass** das Verfahren weiterhin die folgenden Schritte umfasst:
- Überwachen (6) vor dem Anordnen des Anrufs in einer Warteschlange, ob der Reservierungscode von der Basisstation innerhalb eines ersten vorbestimmten Zeitintervalls empfangen worden ist, wobei dieses Zeitintervall mit der Übertragung der Überlastungsnachricht beginnt, und wenn dies der Fall ist, das Durchführen des Schrittes (7) des Plazierens des Anrufs in einer Warteschlange, und wenn dies nicht der Fall ist, des startens (1) zur Bearbeitung des nächsten Anrufs, ohne den ursprünglichen Anruf in einer Warteschlange anzuordnen,
- während eines vorbestimmten zweiten Zeitintervalls, das Warten (11) in einer Basisstation auf Wahlinformation vom Anrufer, an den die Mitteilung gesandt worden ist, dass ein Sprachkanal freigekommen ist, und im Falle, dass solch eine Wahlinformation empfangen worden ist, das Aufsetzen (13) der Verbindung mit der Zieladresse, die mit der besagten Wahlinformation verknüpft ist.

2. Verfahren nach Anspruch 1, **dadurch gekennzeichnet, dass** die Daten, die einem Anruf zugeordnet sind, in einem Speichermittel gespeichert werden, welches in der Basisstation vorhanden ist, nachdem der Reservierungscode empfangen worden ist, wobei der Reservierungscode durch eine Anruferidentifikation begleitet wird.

3. Verfahren nach Anspruch 1, dadurch gekehnzeichnet, dass ein Anruf aus der Warteschlange gelöscht wird, wenn das mobile Endgerät, von dem aus der Anruf gestartet worden ist, ausgeschaltet wird.

4. Verfahren nach Anspruch 1, **dadurch gekennzeichnet, dass** ein Anruf aus der Warteschlange gelöscht wird, wenn, nachdem der Anruf in der Warteschlange angeordnet worden ist, ein drittes Zeitintervall abgelaufen ist, bevor ein Sprachkanal freigekommen ist.

5. Verfahren nach Anspruch 4, **dadurch gekennzeichnet, dass** die Basisstation eine zweite Mitteilung an den Anrufer überträgt, wenn sein Anruf aus der Warteschlange gelöscht worden ist.

6. Verfahren nach einem der vorstehenden Ansprüche, **dadurch gekennzeichnet, dass** ein Anruf von einem bestimmten mobilen Endgerät in der Warteschlange einer Basisstation nur einmal angeordnet wird.

7. Verfahren nach einem der vorstehenden Ansprüche, **dadurch gekennzeichnet, dass** ein Anrufer in der Warteschlange von dem zellulären Telekommunikationssystem hinsichtlich der zahl von älteren Anrufen in der Warteschlange benachrichtigt wird, die früher für eine Bearbeitung ausgewählt werden könnten, insbesondere im wesentlichen gleichzeitig mit der Einreihung in die warteschlange oder sobald die Anzahl von älteren Anrufen abnimmt.

8. Verfahren nach einem der vorstehenden Ansprüche, **dadurch gekennzeichnet, dass** der Anruf aus der Warteschlange der ersten Basisstation gelöscht und in die Warteschlange der zweiten Basisstation eingeordnet wird, nachfolgend von Anrufen, die dort möglicherweise angeordnet sind, wenn das mobile Endgerät, von dem der Anruf ausging, aus dem Bereich der ersten Basisstation in den Bereich einer zweiten Basisstation verlegt wird, falls zu dieser Zeit kein Rufkanal in der zweiten Basisstation verfügbar ist.

9. Verfahren nach Anspruch 8, **dadurch gekennzeichnet, dass** für jeden Anruf in einer Warteschlange das Zeitintervall, währenddessen jeder Anruf in der Warteschlange ist, in der Warteschlange aufgefrischt wird, und dass im Falle des Bewegens des Anrufens von einer Warteschlange in einer ersten Basisstation zu einer Warteschlange in einer zweiten Basisstation, der Anruf in einer Position in der zweiten Warteschlange eingereiht wird, der der Zeitdauer seines Verbleibens in der ersten Warteschlange entspricht.

## Revendications

1. Procédé pour rendre disponible une voie téléphonique libérée après une période de congestion, dans un système de télécommunications cellulaire comprenant les étapes suivantes :
- déterminer (2), après réception par une station de base, par l'intermédiaire du canal de signalisation prévu dans ce but, d'un appel provenant d'un utilisateur d'un terminal mobile situé dans la portée de ladite station de base, si une voie téléphonique est disponible pour traiter ledit appel ;
- établissement (3) d'une liaison avec la destination demandée par l'appelant, si une voie téléphonique est disponible ;
- si aucune voie téléphonique n'est disponible, transmission (17) d'un message de congestion à l'appelant et mise en place (7) de l'appel dans une file d'attente par la station de base lorsqu'un code de réservation est reçu dans la station de base provenant de l'appelant par l'intermédiaire du canal de signalisation ;
- détermination, dans le cas d'une libération d'une voie téléphonique, s'il existe des appels dans la file d'attente, transmission (18) depuis la station de base d'une première notification à l'appelant dont l'appel a été dans la file d'attente la plus longue, première notification qui notifie audit appelant qu'une voie téléphonique est devenue disponible pour lui, et établissement (13) d'une connexion pour cet appel ;
**caractérisé en ce que** le procédé comporte en outre les étapes suivantes :
- vérification (6), avant mise en place de l'appel dans une file d'attente, si le code de réservation est reçu par la station de base à l'intérieur d'un premier intervalle de temps prédéterminé, intervalle de temps qui débute lors de la transmission du message de congestion, et lorsque ceci est le cas, exécution de l'étape (7) de mise en place de l'appel dans une file d'attente et lorsque ceci n'est pas le cas, début (1) du traitement de l'appel suivant, sans placer l'appel original dans une file d'attente ;
- durant un second intervalle de temps prédéterminé, attente (11) dans la station de base pour une information de numérotation provenant de l'appelant auquel la notification d'une voie téléphonique devenant disponible a été transmise, et dans le cas de la réception de cette information de numérotation, établissement (13) de la connexion avec la destination associée à ladite information de numérotation.

2. Procédé selon la revendication 1, **caractérisé en ce que** les données associées à l'appel sont mémorisées dans une mémoire, présente dans la station de base après réception du code de réservation, lequel code de réservation est accompagné d'une identification de l'appelant.

3. Procédé selon la revendication 1, **caractérisé en ce qu'**un appel est supprimé de la file d'attente lorsque le terminal mobile, d'où provient l'appel, est coupé.

4. Procédé selon la revendication 1, **caractérisé en ce qu'**un appel est supprimé de la file d'attente lorsque, après que l'appel a été placé dans la file d'attente, il s'est écoulé un troisième intervalle des temps avant qu'une voie téléphonique soit devenue disponible.

5. Procédé selon la revendication 4, **caractérisé en ce qu'**une seconde notification est transmise à l'appelant par la station de base lorsque son appel est supprimé de la file d'attente.

6. Procédé selon l'une quelconque des revendications précédentes, **caractérisé en ce qu'**un appel provenant d'un terminal mobile particulier est inclus dans la file d'attente d'une station de base seulement une fois.

7. Procédé selon l'une quelconque des revendications précédentes, **caractérisé en ce qu'**un appelant dans la file d'attente reçoit une notification du système de télécommunications cellulaire du nombre d'appels antérieurs dans la file d'attente, éligibles pour être traités plus tôt, notamment, sensiblement simultanément avec la mise en place dans la file d'attente ou dès que le nombre d'appels antérieurs diminue.

8. Procédé selon l'une quelconque des revendications précédentes, **caractérisé en ce que**, lorsque le terminal mobile d'où provient l'appel est décalé de la plage d'une première station de base vers la plage d'une seconde station de base, l'appel est supprimé de la file d'attente de la première station de base et placé dans la file d'attente de la seconde station de base à la suite d'appels existants déjà éventuellement dans celle-ci, si à cet instant il n'existe pas de voie téléphonique disponible dans la seconde station de base.

9. Procédé selon la revendication 8, **caractérisé en ce que**, pour chaque appel dans une file d'attente, l'intervalle de temps durant lequel l'appel en question se trouve dans la file d'attente est mis à jour et, dans le cas d'un décalage de l'appel d'une file d'attente dans une première station de base vers une file d'attente dans une seconde station de base, l'appel est déplacé dans une position dans la seconde file d'attente correspondant à la durée de son séjour dans la première file d'attente.
